Europäisches Patentamt

European Patent Office

Office européen des brevets

(11) Publication number: **0 187 654 B1**

(12) **EUROPEAN PATENT SPECIFICATION**

(45) Date of publication of patent specification: **07.08.91**

(51) Int. Cl.5: **F02D 41/04**, F02D 21/10, F02D 33/00, F02B 17/00

(21) Application number: **86100113.9**

(22) Date of filing: **07.01.86**

(54) **A fuel control apparatus for an internal combustion engine.**

(30) Priority: **08.01.85 JP 1243/85**

(43) Date of publication of application:
**16.07.86 Bulletin 86/29**

(45) Publication of the grant of the patent:
**07.08.91 Bulletin 91/32**

(84) Designated Contracting States:
**CH DE FR GB IT LI NL SE**

(56) References cited:
**DE-A- 2 453 335**    **GB-A- 2 087 480**
**US-A- 4 052 968**    **US-A- 4 079 711**
**US-A- 4 084 563**    **US-A- 4 089 310**

(73) Proprietor: **HITACHI, LTD.**
**6, Kanda Surugadai 4-chome**
**Chiyoda-ku, Tokyo 100(JP)**

(72) Inventor: **Yamauchi, Teruo**
**2432-19 Higashi-ishikawa**
**Katsuta-shi Ibaraki 312(JP)**
Inventor: **Nogi, Toshiharu**
**Yuhouryo 6-20-3 Ayukawa-cho**
**Hitachi-shi Ibaraki 316(JP)**
Inventor: **Oyama, Yoshishige**
**3-24-18 Higashi-ooshima**
**Katsuta-shi Ibaraki 312(JP)**

(74) Representative: **Patentanwälte Beetz sen. -**
**Beetz jun. Timpe - Siegfried - Schmitt-**
**Fumian**
**Steinsdorfstrasse 10**
**W-8000 München 22(DE)**

## Description

This invention relates to an air-fuel control apparatus which can remarkably improve the combustion of lean mixtures in internal combustion engines.

In a conventional method of controlling the air-fuel ratio in the fuel supply system of a gasoline burning type internal combustion engine, fuel is controlled in the following way, as is disclosed in, for example, JP-A-58-41231. The air-fuel ratio is increased to reduce fuel consumption in the operational range of low load, and a feedback control is adopted in the operational range of middle load in which the air-fuel ratio is maintained at the so-called theoretical value in order to secure a clean exhaust gas and drivability. In the operational range of heavy load, the air-fuel ratio is made smaller than the theoretical air-fuel ratio to keep the developed power. If the above described control method is applied perfectly, problems of fuel economy, purification of exhaust gas, drivability and the like can theoretically be solved.

In setting such air-fuel ratios, however, errors are produced depending upon the change with time in the accuracy of various sensors and actuators, and the fuel controlling apparatus cannot actually take the set values with respect to each load. Further, the air-fuel ratio has to be set at a considerably high value for the purpose of effective achievement of fuel economy, and combustion must be effected under good conditions even with such lean air-fuel mixtures.

To this end, means for improving the combustion have recently been studied. These means consist in dividing the intake port portion into two parts, providing a valve for generating vortexes in one part thereof which is to be closed at the time of a partial load to increase the air-flow rate in the intake port portion, and providing a swirl flow of the air-fuel mixture in the combustion chamber so that it is easy to ignite.

These measurements are advantageous in that the structure is simple and that since it acts in correspondence with the negative pressure at the time of intake, the degree of opening can be set approximately by the load. On the other hand, these means are disadvantageous in that the throttling effect produced in the low load range is not sufficient to provide a swirling flow of the air-fuel mixture in the combustion chamber. Furthermore, at the time of full load, draft resistance is inevitable in spite of the full opening of the valve.

In addition, although it is said that the swirl flow produced in the combustion chamber is effective for atomization of fuel and promotion of combustion, it is difficult to maintain the swirl flow in each intake and compression stroke under every operational condition.

It has been also tried to properly select the fuel injection timing and to perform a feedback control of the air-fuel ratio by using an air-fuel ratio sensor which infers the actual air-fuel ratio from the concentration of residual oxygen in the exhaust gas. In this case, though combustion of lean mixtures is accomplished under normal partial load, the performance at the time of starting, in transitional periods and in the maximum output of full opening of the throttle valve is at most the same as that of a conventional engine.

US-A-4 089 310 discloses a carburetor-type multi-cylinder internal combustion engine comprising an air-fuel control apparatus. At least one of the combustion chambers is supplied with a rich mixture having a smaller air-fuel ratio than the stoichiometric air-fuel ratio, and the remaining combustion chambers are supplied with a lean mixture having a larger air-fuel ratio than the stoichiometric one. The lean mixture is produced by introducing additional air into the lean mixture cylinders by means of a valve-controlled air bypass pipe connected to the intake pipe and opening in the vicinity of the intake valve of the respective cylinder. By controlling the rich and/or the lean mixtures in accordance with the air-fuel ratio signal, the total air-fuel ratio is practically kept at a predetermined value.

GB-A-2 087 480 also discloses a charge intake system for multi-cylinder internal combustion engines comprising at least one valve-controlled air bypass pipe opening toward the respective combustion chamber such as to generate a swirl of suction gas swirling in circumferential direction in the combustion chamber during the suction stroke. These measures lead to an improvement of the combustion effectivity. This document does not deal with combustion of lean mixtures.

Also JP-A-57-137617 relates to an intake system for multi-cylinder internal combustion engines comprising a valve-controlled air-bypass pipe wherein the intake region in the vicinity of the intake valve is specifically designed to produce an intense swirling of the intake air-fuel mixture for improving the combustion characteristics.

DE-A-24 53 335 discloses an internal combustion engine comprising an air-fuel intake system provided with an air bypass the downstream end of which opens in the vicinity of the intake valve. In this system, which may comprise a carburetor or an injection valve, a stratified charge is obtained by means of a partial subdivision of the combustion chamber such that in the vicinity of the ignition plug a rich mixture is obtained, the air-fuel ratio of the total mixture in the combustion chamber corresponding to the desired control value.

It is the object of this invention to provide an

2

air-fuel control apparatus for internal combustion engines which can achieve improved combustion performance with cosiderably lean air-fuel mixtures, and which can satisfy the requirements of low fuel consumption, clean exhaust gas and good drivability for every operational condition of the engine.

The above object is achieved according to claim 1.

The dependent claims relate to prefered embodiments.

The air-fuel control apparatus of the present invention for injection-type multi-cylinder internal combustion engines comprises

- an intake pipe coupled to the respective cylinders for introducing air-fuel mixture into the cyclinders;
- a throttle valve provided in the intake pipe for controlling the amount of introduced air;
- fuel injection means disposed in the intake pipe, comprising a fuel injection valve and an atomizer connected to the fuel injection valve, for atomizing the injected fuel,
- an airflow meter provided in the intake pipe;
- an air bypass pipe connected to the intake pipe the upstream end thereof opening at the upstream side of the airflow meter, and the downstream end thereof opening in the vicinity of the intake valve of the respective cylinder, the air bypass pipe comprising an air bypass valve determining an additional air amount introduced into the intake pipe and being arranged such that the additional air provided by the air bypass pipe is at first and the air-fuel mixture is subsequently sucked into the cylinder, thus forming a lower phase of additional air and an upper phase of air-fuel mixture, respectively, in the combustion chamber, and

- control means responsive to signals representative of operational conditions of the engine and controlling the fuel injection means and the air bypass valve such as to follow a predetermined reference value of the air-fuel ratio, the control means controlling the opening degree of the air bypass valve in dependence of the detected load of the engine such that within a predetermined load range a lean air-fuel mixture is obtained for each cylinder.

In accordance with a prefered embodiment, the control means are adapted to control the opening degree of the air bypass valve in dependence of the detected load of the engine such that in the idling range and in the acceleration range an air-fuel mixture corresponding to the stoichiometric air-fuel ratio is obtained for each cylinder.

According to another embodiment, the control means are adapted to stop the introduction of additional air by keeping the air bypass valve closed so that an air-fuel mixture corresponding to an air-fuel ratio lower than the stoichiometric value is obtained when the engine is operated under maximum load.

Accordingly, the combustible fluid sucked into the cylinders consists of the additional air and the air-fuel mixture, and they are so stratified within the cylinders that the first sucked additional air forms a bottom phase, and the later sucked air-fuel mixture is positioned in the uppermost phase. As a result therefrom, the ignition plug is surrounded by the later sucked air-fuel mixture, and hence the firing performance is not reduced. On the other hand, the average air-fuel ratio of the whole combustible fluid sucked into the cylinder becomes much higher than that the air-fuel mixture originally supplied by the fuel supplying means. Thereby, the so-called lean combustion is improved to a great extent.

Accordingly, this invention allows operating the engine with extremely lean mixtures within a range of operational conditions in which the engine is not required to produce a large output.

In the following, the invention will be explained with reference to the drawings.

Fig.1 shows the whole structure of a fuel control apparatus for an internal combustion engine according to an embodiment of this invention;

Figs.2 to 4 are time charts which show the operational states of various parts or factors in the embodiment shown in Fig.1;

Fig.5 is a block diagram of a control circuit used in the embodiment of Fig.1;

Fig.6 shows an example of the relationship between a reference air-fuel ratio and the degree of opening of the throttle valve (required load);

Fig.7 is a diagram for explaining the relationship between the degree of opening of the throttle valve and the range of the required load;

Fig.8 shows an example of the characteristic of an air-fuel ratio sensor used in the embodiment of Fig.1; and

Figs. 9a to 9d are flow charts for explaining the operation of the micro-computer as a main part of the control circuit shown in Fig.5.

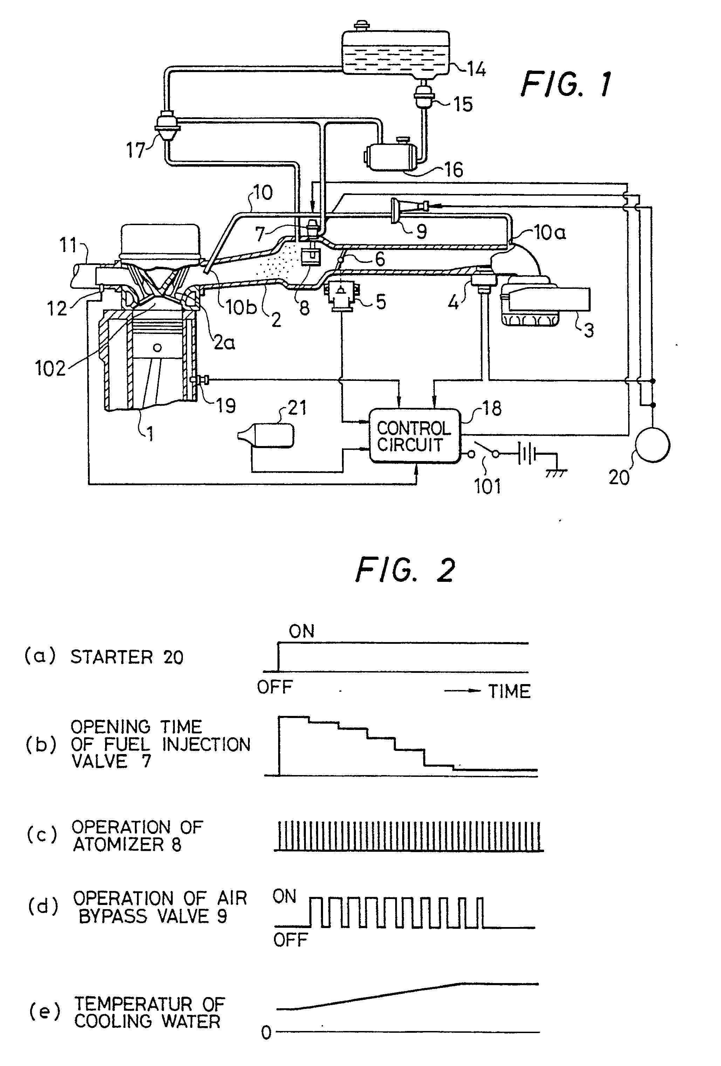

Fig.1 shows the whole structure of an embodiment of a fuel control apparatus according to the invention. The apparatus of Fig.1 comprises an internal combustion engine 1, an intake pipe 2, an intake valve 2a and an air cleaner 3 which is attached to the intake pipe 2. An airflow meter 4, a throttle sensor 5, a throttle valve 6, and an atomizer 8 connected to a fuel injection valve 7 are also attached to the intake pipe 2. As the atomizer mentioned above, an ultrasonic wave type atomizer as disclosed in US-A-4 105 004 can be used. The apparatus further comprises an air bypass valve 9, an air bypass pipe 10, an exhaust pipe 11, and an air-fuel ratio sensor 12 attached to the exhaust pipe 11 for detecting the air-fuel ratio from an output signal proportional to the concentration of the residual oxygen in the exhaust gas. The intake pipe 2 and the exhaust pipe 11 are connected to the engine 1, and the downstream end 10b of the air bypass pipe 10 opens into the intake pipe 2 in the vicinity of the intake valve 2a. The air bypass valve 9 is provided midway in the air bypass pipe 10, and the upstream end 10a of the air bypass pipe 10 opens into the upstream side of the airflow meter 4. The fuel to be introduced to the injection valve 7 is supplied from a tank 14 through a filter 15 and a pump 16, and the pressure of the fuel is controlled by a regulator 17 in response to a signal representing the internal pressure of the intake pipe 2. The remaining reference numerals will be referred to in the following explanation of the operation.

It is to be noted that it is significant to provide the upstream end 10a of the bypass pipe 10 at the upstream side of the airflow meter 4 and the downstream end 10b thereof in the vicinity of the intake valve 2a. As the result of this structure, the introduction of additional air is controlled by the air bypass valve 9 independently of the airflow through the intake pipe 2, the rate of which is measured by the airflow meter 4, and the additional air is always introduced to stagnate in the intake pipe 2 in the vicinity of the intake valve 2a. Accordingly, although the air-fuel mixture is supplied from the atomizer 8 when a corresponding cylinder 102 of the engine 1 comes to a suction stroke, the additional air stagnating in the vicinity of the intake valve 2a is at first sucked into the cylinder when the intake valve 2a is opened, and the supplied air-fuel mixture follows thereto. The additional air and the air-fuel mixture sucked into the cylinder may be mixed to a great extent. However, when the combustible fluid within the cylinder 102 is viewed as a whole, it is divided into two phases in the order of suction, i.e. an upper phase of the air-fuel mixture, and a lower phase of the additional air. It may also be said that the combustible fluid within the cylinder 102 is divided into three phases, i.e. an upper phase of the air-fuel mixture, a middle phase of the mixed fluid of the additional air and the air-fuel mixture, and a bottom phase of the additional air. In any case, the uppermost portion of the combustible fluid within the cylinder 102 is occupied by the air-fuel mixture supplied from the fuel injection valve 7 and atomized by the atomizer 8.

After the suction stroke, the cylinder 102 comes to a compression stroke. The combustible fluid within the cylinder 102 is compressed with the above-mentioned phase conditions maintained. Accordingly, when the compressed fluid is ignited by an ignition plug (not shown), the ignition plug is in contact with the air-fuel mixture occupying the uppermost portion of combustible fluid, so that ignition is easy to take place if the air-fuel ratio of the mixture has an appropriate value, the theoretical value 15, for example. On the other hand, the air-fuel ratio of the whole combustible fluid within the cylinder 102 is higher than that of the air-fuel mixture supplied from the atomizer 8, since the additional air is further added. The air-fuel ratio sensor 12 detects such air-fuel ratio, and the feedback control is conducted by using the output of the sensor 12. A reference of the air-fuel ratio in this feedback control can be set at a considerably high value of 22 to 24, for example, since good ignition is secured as mentioned above.

Next, the operation of the apparatus shown in Fig.1 will be explained.

(1) Starting and warming-up stage

Referring at first to Figs. 1 and 2, the operation of the starting and warming-up stage is explained. In starting the engine 1, when the ignition key switch 101 (Fig. 1) is switched on, and the starter 20 (Fig. 1) starts to operate (cf. Fig.2(a)), the control circuit 18 reads the signal from a cooling water temperature sensor 19 (Fig. 1) of the engine 1 and determines the amount of fuel to be injected from the fuel injection valve 7. At this time, the atomizer 8 begins to operate simultaneously with the starting of the starter 20 (cf. Fig.2(c)), and atomizes the fuel injected from the injection valve 7. The atomized fuel is carried by the airflow within the intake pipe 2 and is sucked into the cylinder 102. The air bypass valve 9 does not operate at this time, and the concentration of the air-fuel mixture in the intake pipe 2 is set so as to be slightly higher than the theoretical air-fuel ratio. Energy from an ignition coil 21 (Fig. 1) is supplied to the ignition plug in the cylinder 102 to ignite the fuel at an ignition time preset in the control circuit 18. In this figure, the ignition plug and the high tension cord connected between the ignition coil 21 and the ignition plug are omitted for simplifying the drawing.

When the engine 1 reaches the condition that it can keep continuous rotation, the control circuit 18 immediately actuates the air bypass valve 9 to introduce additional air into the air bypass pipe 10. The amount of additional air is controlled on the basis of the number of revolutions of the engine 1 and the signal from the airflow meter 4 in accordance with the value mapped in advance in the storing portion of the control circuit 18. The air bypass valve 9 can be either a valve of the type in which the time ratio (duty ratio) of repeated opening and closing operation is controlled, or a valve of the type in which the frequency of the repeated opening and closing operation is controlled with the opening time kept constant. Further, a valve whose opening area is controlled, like a proportional solenoid valve, can be also used. In this embodiment, the valve of the first type was used. It is operated at a frequency of about 40 Hz, and the duty ratio is controlled as mentioned above. It is because the number of engine revolutions is set to be higher than that at the time of idling in order to warm up the engine 1 quickly, that the air bypass valve 9 is actuated immediately after starting of the engine 1.

When the engine 1 starts continous rotation, the control circuit 18 immediately reads the signal from the air-fuel ratio sensor 12 provided in the exhaust pipe 11 and detects the actual air-fuel ratio at which the engine 1 is operating then. The detected air-fuel ratio is compared with the reference air-fuel ratio which is read out from an air-fuel ratio map in the control circuit 18 in response to the number of revolutions of the engine 1 at that time. As the result of this comparison, the deviation between the reference and the actual air-fuel ratios is obtained. The preset range of the valve opening time of the fuel injection valve 7, or the valve opening time of the air bypass valve 9 is corrected in correspondence with the amount of the deviation obtained. It is more advantageous in view of better responsiveness to correct the opening degree of the air bypass valve 9, because air moves speedy.

As the warming-up stage proceeds, the number of revolutions of the engine 1 is apt to become high. Then, the control circuit 18 issues a command to reduce the amount of fuel injection (cf. Fig.2(b)) and shorten the valve opening time of the air bypass valve 9 (cf. Fig.2(d)) in accordance with the signal from the cooling water temperature sensor 19 (cf. Fig.2(e)), so that the number of revolutions of the engine 1 is maintained at the value at the time of the warming-up operation which is usually set at about 1 500 $min^{-1}$. When the cooling water reaches the predetermined temperature, i.e. when the warming-up is completed, the operation of the air by-pass valve 9 is stopped (cf. Figs.2(d) and (e)).

(2) Acceleration and deceleration

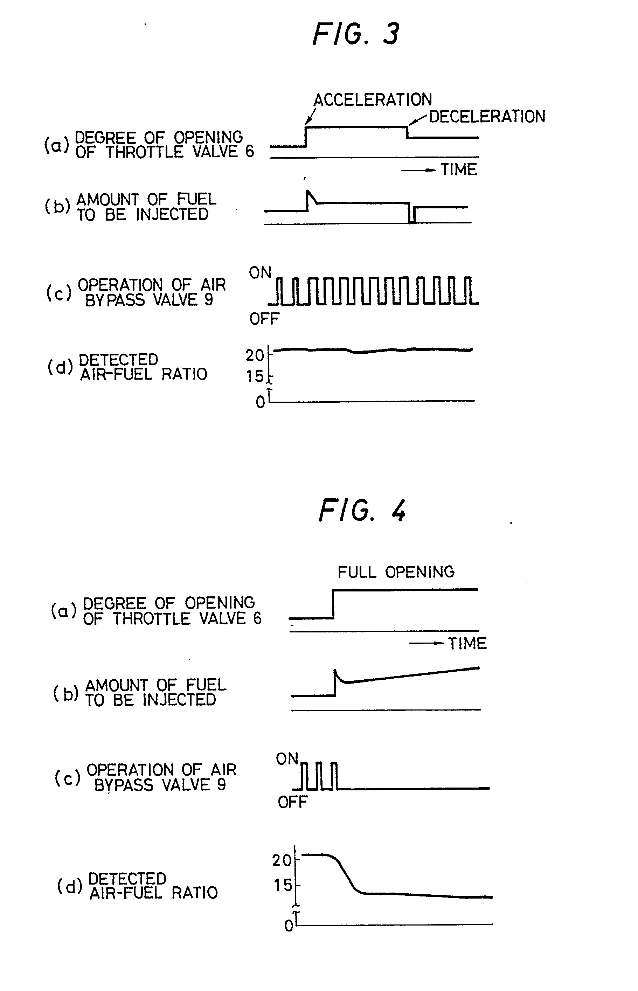

Next, the operation of acceleration and deceleration in the partial load range is explained, referring to Fig.3. This figure is a time chart which shows the amount of fuel to be injected (b), the operational state (c) of the air bypass valve 9, and the state (d) of the detected air-fuel ratio when the throttle valve 6 is half opened (acceleration in the partial load range) and is thereafter slightly closed (deceleration in the same) (a).

When the throttle valve 6 is rapidly opened, the actual amount of air sucked into the cylinder 102 becomes by the amount of air previously filled between the inlet of the intake pipe 2 and the throttle valve 6 more than the amount of air measured by the airflow meter 4. Therefore, an instantaneous enrichment of the fuel is effected so as to maintain the predetermined value of the air-fuel ratio of the mixture, and the amount of enrichment is gradually reduced to prevent the too lean mixtures (cf. Fig.3(b)). Thereafter, the amount of fuel is injected in correspondence with the amount of air and the number of revolutions of the engine. The rate of the instantaneous increase in the amount of fuel is determined by calculating the amount of fuel by means of the control circuit 18 in accordance with the amount of change per time unit of the opening degree of the throttle valve 6.

In this case, in the upstream side of the intake pipe 2 with respect to the outlet of the air bypass pipe 10 which introduces the additional air, the air-fuel ratio is so controlled by the control circuit 18 as to be constantly 15 (the theoretical air-fuel ratio) after the warming-up operation. The mixture of such air-fuel ratio is sucked into the cylinder 102, following the additional air which flows from the bypass pipe 10. The combustible fluid sucked into the cylinder 102 has a higher average air-fuel ratio than the originally supplied mixture. This sucked fluid is compressed and ignited to burn. The ignition is easy to take place, since the ignition plug is surrounded by the originally supplied mixture which has the theoretical air-fuel ratio, as described before.

The air-fuel ratio sensor 12 attached to the exhaust pipe 11 detects the air-fuel ratio from the exhaust gas to send a signal corresponding thereto to the control circuit 18. The control circuit 18 controls the degree of the valve opening time of the air bypass valve 9 in accordance with the signal from the sensor 12 so as to obtain the predetermined air-fuel ratio, 21, for example (cf. Figs.3(c) and (d)). The atomizer 8 works in conjunction with the operation of other fuel supplying devices to promote atomization of fuel (the operation of the atomizer 8 is not shown in Fig.3).

The operation at the time of deceleration is quite similar to that of acceleration mentioned above. When the throttle valve 6 is slightly closed (cf. Fig.3(a)), the amount of fuel to be injected is once reduced down to zero (cf. Fig.2(b)). This is for the purpose of preventing an overenrichment of the mixture sucked into the cylinder 102. Such an overenrichment results from the fact that the fuel adhering to the inner wall of the intake pipe 2 is sucked into the cylinder 102 by the increase in the negative pressure caused by rapid closing of the throttle valve 6. The control circuit 18 produces a signal on the basis of the output signal of the air-fuel ratio sensor 12 to reduce the duty ratio of the air by-pass valve 9 (cf. Fig.3(c)). As a result, the air-fuel ratio of the combustible fluid to be burnt is maintained at the predetermined value, 21, for example, although the originally supplied mixture is so adjusted to have the theoretical valve (cf. Fig.3-(d)).

(3) Maximum output operation

In the case of acceleration under full load in which the opening degree of the throttle valve 6 is large, the amount of the air which flows from the air bypass pass pipe 10 is necessarily reduced, since the difference in pressure decreases between the inlet and outlet of the air bypass pipe 10 because of the large opening degree of the throttle valve 6. The air-fuel ratio of the combustible fluid which is sucked into the cylinder 102 becomes almost equal to the theoretical air-fuel ratio which is adjusted by means of the airflow meter 4, the control circuit 18 and the fuel injection valve 7.

Figs.4(a) to 4(d) schematically show a time chart of the operation of the various parts, in which Fig.4(a) shows the opening degree of the throttle valve 6, Fig.4(b) the amount of fuel to be injected, Fig. 4(c) the operational state of the air bypass valve 9 and Fig.4(d) the detected air-fuel ratio. When the throttle valve 6 is fully opened (cf. Fig.4-(a)), the air bypass valve 9 is closed (cf. Fig.4(c)), and the amount of fuel temporarily increases as in the case of the partial load described above, thereby preventing a transitional lean conditions of the air-fuel mixture (cf. Fig.4(b)). The control circuit 18 maintains the air-fuel ratio within the range of 12 to 13 in which the torque of the engine 1 is at its maximum (cf. Fig.4(d)). When the number of engine revolutions is more than 3 000 $min^{-1}$, and at the time of fully-open operation, the operation of the atomizer 8 is stopped in order to reduce the electric power consumption. The operation of the atomizer 8 is not shown in Fig. 4.

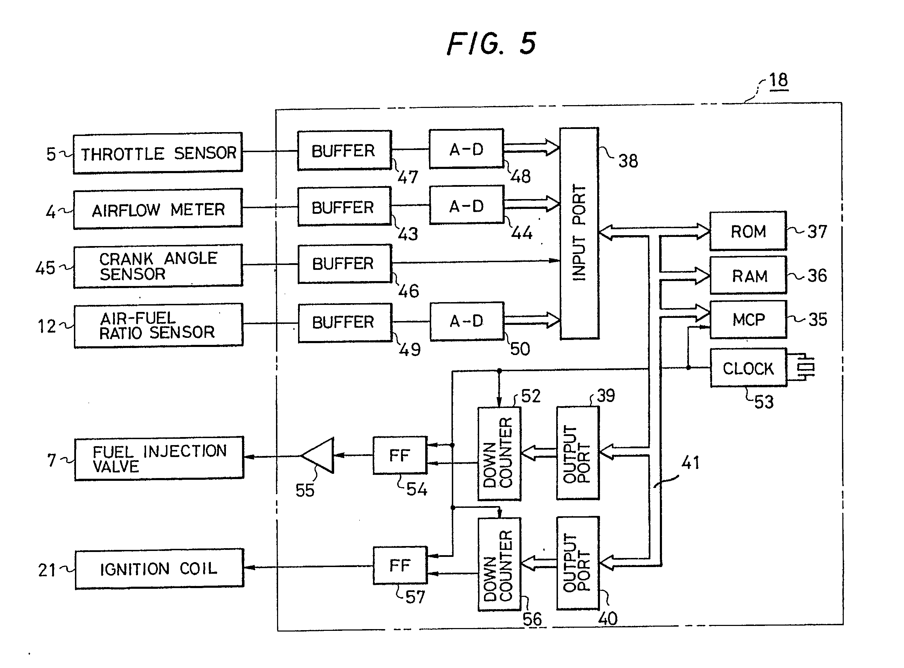

The structure of the control circuit 18 in Fig.1 will now be explained in detail with reference to Fig.5.

Fig.5 is a block diagram of an example of the control circuit 18 in Fig.1. The control circuit 18 is mainly composed of a digital microcomputer (MCP), and signal processing operations executed with respect to various input signals described below. The MCP 35, a random access memory (RAM) 36, a read-only memory (ROM) 37 in which constants, programs and the like are stored, an input port 38, and outputs 39 and 40 are connected to each other through a bidirectional bus 41.

The airflow meter 4 is connected to the input port 38 through a buffer 43 and an A-D converter 44. A hot wire type or a movable vane type sensor which measures mass flow rate can be used as the air flow meter 4. It produces a signal which corresponds to the amount of air sucked by the engine 1. Then the output voltage of the airflow meter 4 is converted into a binary coded digital signal by the A-D converter 44, and the digital signal is input to the MCP 35 through the input port 38 and the bus 41. The signal from a crank angle sensor 45 for detecting the rotational movement of a crank shaft is applied to the input port 38 through a buffer 46 and is input to the MCP 35 through the bus 41, where the number of rotations of the crank shaft of the engine 1 is calculated.

The signal of the throttle sensor 5 indicative of the amount of depression of the accelerator pedal is sent through a buffer 47 to an A-D converter 48, in which the signal is converted into a binary coded digital signal and input to the MCP 35 through the bus 41. This signal conveys the driver's intention to the MCP 35. The signal produced by the air-fuel ratio sensor 12 is converted into a binary value by an A-D converter 50 through a wave shaping circuit 49, and is input to the MCP 35 through the input port 38 and the bus 41.

The output ports 39, 40 output data for actuating the fuel injection valve 7 and the ignition coil 21. The data, from the MCP 35 are written into the output port 39 through the bus 41, and the binary data from the output port 39 are input into a down counter 52. The decrementing of the data from the output port 39 is started by a clock signal from a clock generator 53, and when the content of the counter 52 reaches zero, a count completion signal is generated at the output terminal. The output from the output terminal of the counter 52 is input into a flip-flop circuit (FF) 54, which also receives the clock signal from the clock generator 53, thereby maintaining the output terminal of the flip-flop circuit 54 at a high level during the decrementing operation of the down counter 52. The output of the flip-flop circuit 54 is connected to the fuel injection valve 7 through an amplifier 55, so that the injection valve 7 acts to inject fuel only while the output terminal of the flip-flop circuit 54 is maintained at a high level.

The ignition control will be explained in the following. The binary data indicating the ignition angle which are calculated by the MCP 35 and once stored in the RAM 36 are read out from the RAM 36 to be set in the output port 40 through the bus 41. Similarly to the injection control described before, a down counter 56 starts the decrementing of its content by the clock pulse supplied from the clock generator 53. When the content of the counter 56 becomes zero, i.e. when the position of the crank shaft reaches the proper ignition angle, the counter 56 produces an output signal to reset a flip-flop circuit (FF) 57 which is maintained at a high level during the decrementing operation of the counter 56. When the flip-flop circuit 57 is reset, the primary current of the ignition coil 21 is cut so that, as well known, an ignition spark is generated at the ignition plug.

Next, the description will be made of a corrective control of the air-fuel ratio by means of the output signal from the air-fuel ratio sensor 12 when the fuel injection valve 7 is actually operated.

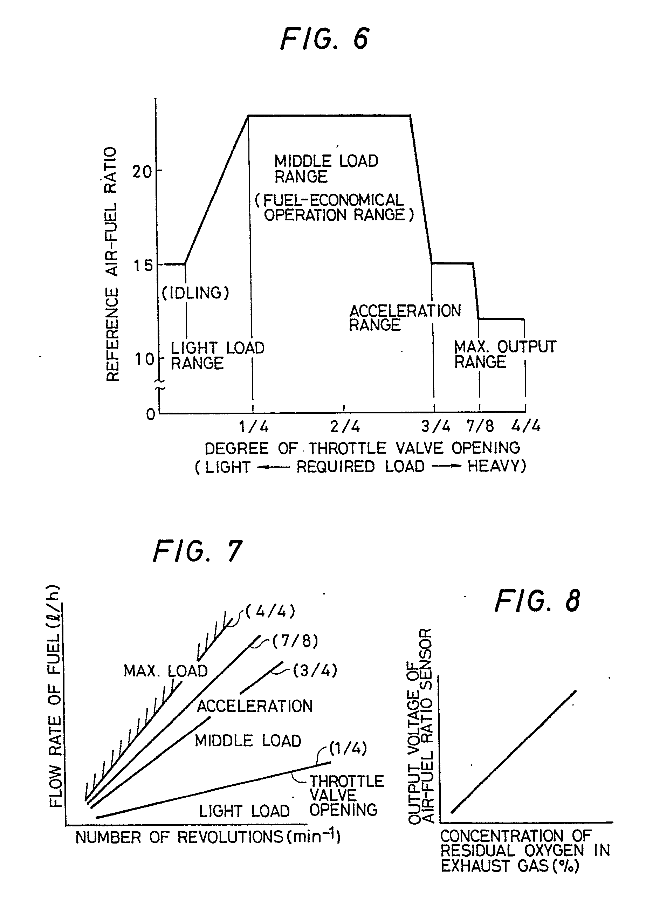

Fig.6 shows an example of a reference air-fuel ratio control pattern with respect to the load of the engine 1 employed when a car is driven using a fuel control apparatus according to the present invention. The ordinate of this figure indicates the air-fuel ratio, and the abscissa the degree of opening of the throttle valve 6 or the degree of load corresponding to the driver's intention. Usually, since the fuel flow rate characteristics of the engine are as shown in Fig.7, the degree of opening of the throttle valve 6 corresponds to the degree of load as follows. Namely, when the driver requires the engine output satisfying light load conditions, he depresses the acceleration pedal so as to open the throttle valve 6 up to a quarter of the full opening. When the acceleration pedal is so depressed that the throttle valve 6 is opened between two to three quarters, that fact means that an engine output meeting the middle load condition is required. Similarly, between three quarters and full opening, the engine is required to produce an output corresponding to acceleration under partial load. When the driver depresses the acceleration pedal completely to fully open the throttle valve 6, this means that he requires the engine to produce the full load output (maximum output).

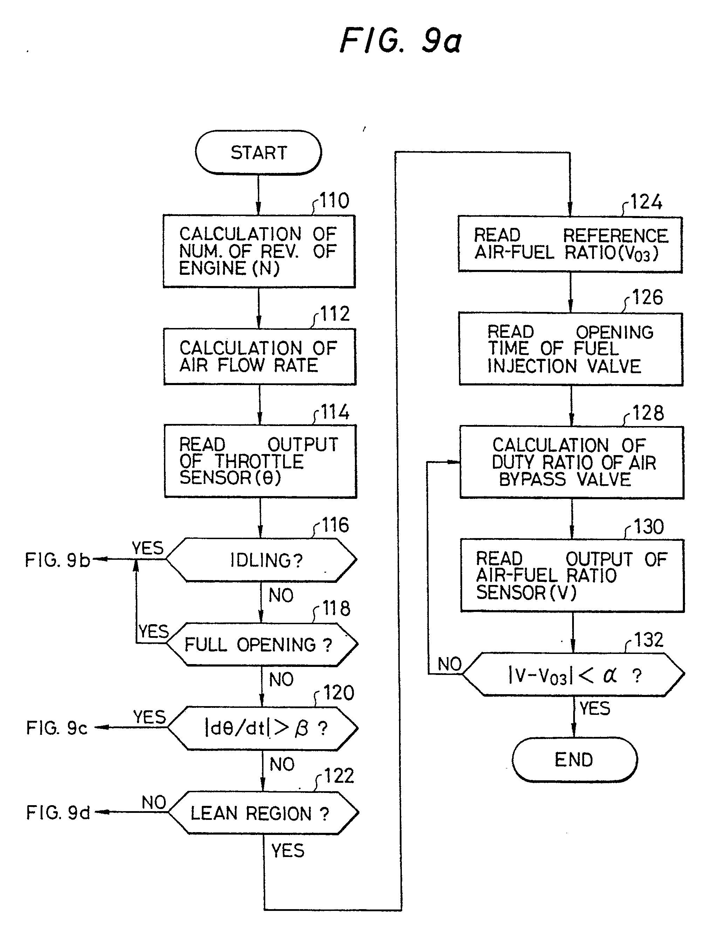

The air-fuel ratio is set as will be described in the following. In the idling range where the load is low, the reference air-fuel ratio is set at the theoretical air-fuel ratio to maintain a stable rotation of the engine 1; in the middle load range, priority is given to fuel economy (middle load range or fuel-economical operation range), and the reference air-fuel ratio is set at a considerably high valve, 22 to 24, for example; the reference air-fuel ratio for the light load except the idling range is controlled proportionally to the degree of the load between the theoretical valve 15 and the high value of 22 to 24; in the acceleracting range, the reference air-fuel ratio is returned to the theoretical air-fuel ratio; and in the range where more power is required (maximum output range), it is set at a mixture which is richer than the theoretical air-fuel ratio, 12 for example. This air-fuel ratio setting pattern varies more or less depending upon the number fo revolutions of the engine 1, and the fuel-economical operational range extends toward the low-load side with an increase in the number of revolutions of the engine 1. In this method of setting the air-fuel ratio with respect to the engine load, a reference air-fuel ratio corresponding to each number of revolutions of the engine is written in advance in the ROM 37 shown in Fig.5. The output voltage of the air-fuel ratio sensor 12 is proportional to the concentration of the residual oxygen in the exhaust gas, as shown in Fig.8, which is mostly dependent on the air-fuel ratio of the mixture burnt in the cylinder 102. For this purpose, an air-fuel ratio sensor as disclosed in US-A-4 158 166 can be used. Therefore, the ROM 37 can store the reference air-fuel ratios mentioned above in the form of voltages corresponding to the output of the air-fuel ratio sensor 12.

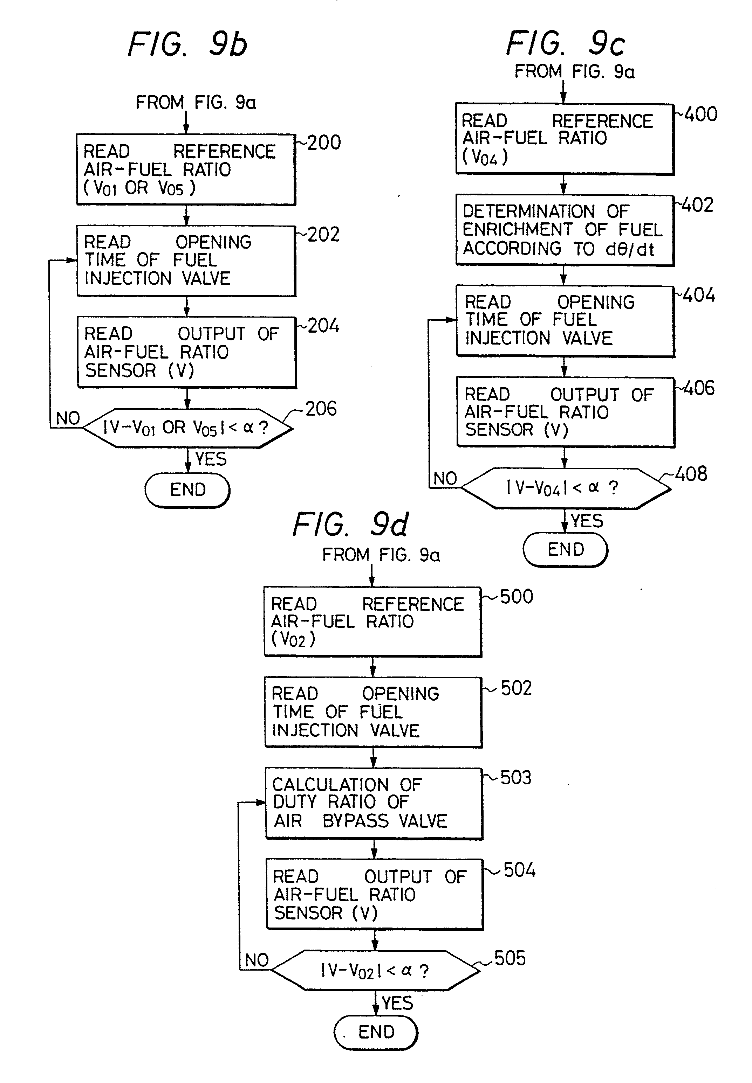

Next, referring to Figs. 9a to 9d, the explanation will be made of the operation conducted by the MCP 35. It is assumed here that the temperature of the engine cooling water has reached a certain value, and the warming-up operation of the engine 1 has been completed.

Referring at first to Fig.9a, the number of revolutions N of the engine 1 is calculated from signals provided by the crank angle sensor 45 in a step 110, and the flow rate of the air sucked into the cylinder 102 through the intake pipe 2 is obtained by calculation on the basis of signals from the airflow meter 4 in a step 112. In step 114, the output 8 of the throttle sensor 5 which is temporarily stored in the RAM 36 is read into the MCP 35, and in succeeding steps, the region of the operational conditions is discriminated by using the read signal $\theta$. Namely, in step 116, it is judged whether or not the throttle valve 6 is completely closed. If the signal $\theta$ is zero, it means that the throttle valve 6 is closed, and it is required to keep the engine 1 idling. Then, the operation proceeds to the steps of the flow chart shown in Fig.9b, which are described later. When the throttle valve 6 is not closed, that is, when the answer in step 116 is negative, it is descriminated in step 118 whether or not the throttle valve 6 is in the condition of full opening. If the throttle valve 6 is fully opened, the engine 1 is judged to be required to produce the maximum output. In the case where the engine 1 is required to produce the maximum output, then the operation also goes to the steps of the flow chart shown in Fig.9b.

When the answer in step 118 is negative, i.e., when the throttle valve 6 is not fully opened, it is judged in step 120 whether or not the degree of opening of the throttle valve 6 varies with respect to time. In the case where the changing rate $d\theta/dt$ takes a certain value larger than a predetermined value $\beta$, that is, when the answer in step 120 is affirmative, the operation proceeds to the steps of the flow chart shown in Fig.9c which are explained later. If the changing rate $d\theta/dt$ is judged to be less than the predetermined value $\beta$, that fact means

that the engine 1 can be operated under the condition of a lean air-fuel mixture, i.e. a mixture of a high air-fuel ratio. Under such conditions, the operation proceeds to step 122, in which it is judged whether or not the operational condition falls into the lean mixture region. If the answer in step 122 is negative, the operation further goes to the steps of the flow chart shown in Fig.9d. On the contrary, when the answer in this step is affirmative, data processing for the operation in the middle load region, i.e. for the fuel-economical operation, takes place in the succeeding steps. In step 124, a reference air-fuel ratio $V_{03}$ in response to the previously discriminated operational condition is read out from a map stored in the ROM 37. Further, the valve opening time of the fuel injection valve 7 is calculated in accordance with the operational condition in step 126. The fuel is injected into the atomizer 8 on the basis of the calculation result.

In step 128, the duty ratio of the operation of the air bypass valve 9 is calculated to attain the air-fuel ratio with respect to the opening of the throttle valve 6 as shown in Fig.6. Further, in step 130, the air-fuel ratio V of the mixture actually burnt in the cylinder which is detected by the air-fuel ratio sensor 12 and temporarily stored in the RAM 36, is read out. In step 132, the actual air-fuel ratio V read out from the RAM 36 is compared with the reference air-fuel ratio $V_{03}$ read out from the map of the RAM 36 in step 124. If the difference between V and $V_{03}$ is less than a predetermined value $\alpha$, the operation is finished, and the engine 1 continues to produce the output, maintaining the operational state at that time. In case the difference between V and $V_{03}$ exceeds the predetermined value $\alpha$, the processing jumps back to step 128, in which the duty ratio of the air by-pass valve 9 is recalculated to be set at a new valve. The actual air-fuel ratio V under the new duty ratio of the air by-pass valve 9 is checked in step 130 and compared with the reference air-fuel ratio $V_{03}$ in step 132. The loop operation of these steps 128, 130 and 132 is executed until the difference between V and $V_{03}$ becomes less than the predetermined value $\alpha$.

Now, referring to Fig.9b, the case is explained where the throttle valve 6 is closed, i.e., where the answer in step 116 of Fig.9a is affirmative. In this case, the engine 1 is required to continue the idling. In step 200, the reference air-fuel ratio $V_{01}$ satisfying the requirement at this time is read out from the map stored in the ROM 37 similarly to step 124 of Fig.9a. In step 202, the valve opening time of the fuel injection valve 7 is obtained in accordance with the operational condition at that time. Similarly to step 130 of Fig.9a, the air-fuel ratio V of the mixture actually burnt in the cylinder 102 is read out from the RAM 36 in step 204 and compared with the reference air-fuel ratio $V_{01}$ read

out in advance in step 206. If the difference between V and $V_{01}$ is less than the predetermined value $\alpha$, the operation is completed, and the engine 1 continues to rotate at a predetermined idling speed. If the difference between V and $V_{01}$ exceeds the predetermined value $\alpha$, the processing returns to step 202, and a new valve opening time of the fuel injection valve 7 is obtained. The loop operation of these steps 206, 202, 204 and again 206 is continued until the difference between V and $V_{01}$ becomes less than the predetermined value $\alpha$.

As is apparent from Fig.9a, also in the case where the throttle valve 6 is fully opened, the operation is executed in accordance with the flow chart shown in Fig.9b. In that case, the reference air-fuel ratio $V_{05}$ must be substituted for $V_{01}$ in the above mentioned explanation.

It is to be noted here that in the operation of Fig.9b the duty ratio of the air bypass valve 9 is not controlled to adjust the introduction of additional air. In other words, a usual feedback control that the actual air-fuel ratio is made to follow to the reference air-fuel ratio read out from the map stored in the ROM 37 is conducted in the idling region and in the maximum output region.

In the case where the operation proceeds to the steps of the flow chart of Fig.9c from step 120 of Fig.9a, that is to say, when the changing rate $d_\theta/dt$ exceeds the predetermined value $\beta$, the operational state of the engine 1 is in the condition of acceleration or deceleration, and the opening of the throttle valve 6 changes every moment. In this case, the increment or decrement of fuel is determined in accordance with the degree of the rate $d_\theta/dt$ in step 402. Other steps 400 and 404 to 408 of Fig.9c are the same as those in Fig.9b mentioned above, except that the reference air-fuel ratio $V_{04}$ is used for $V_{01}$ or $V_{05}$, and hence, an explanation is omitted here.

Fig.9d shows a flow chart of the processing when the operational state of the engine 1 is in the condition of acceleration in the fuel-economical operation region, and the changing rate $d\theta/dt$ is smaller than the predetermined value $\beta$. In this case, the reference air-fuel ratio $V_{02}$ for the transition is set in step 500/ and the operation in the other steps 502 to 505 is the same as that of the corresponding steps in Fig.9a.

Referring to Fig.6 again, it will be understood that the reference of the air-fuel ratio in the present invention varies over a wide range from about 12 to 24, as compared with the conventional range of the air-fuel ratio, from 12 to 16 for example. This may suggest that the acceleration operation will not be carried out smoothly, and, in the deceleration operation, an undesirable enrichment of the mixture sucked into the cylinder takes place. In order to prevent these effects, the driver's intention of acceleration or deceleration is necessary to be caught promptly, whereby an interruption signal is generated to make the MCP 35 start the calculation for changing the reference of the air-fuel ratio. For the purpose of defective the driver's intention without a moment's delay, the movement of the acceleration pedal can be used. The movement of an acceleration link to which the acceleration pedal is fixed is transmitted to the throttle valve 6 through a wire or a link mechanism consisting of plural links or rods. Therefore, there occurs a delay in the movement of the throttle valve 6 in response to that of the acceleration link. Then, there is provided a potentiometer which is directly driven by the acceleration link and produces a signal dependent on the movement thereof, and the above-mentioned interruption signal is produced on the basis of the output signal of the potentiometer. Further, the degree of the acceleration is detected from the differentiated value of the output signal of the potentiometer, so that the acceleration enrichment of fuel is determined in accordance with the detected degree of acceleration. Thereby, a acceleration operation can be achieved.

Similarly, the degree of the deceleration is sensed from the differentiated value of the output signal of the potentiometer. The air bypass valve 9 is actuated on the basis of the degree of deceleration, and the additional air is introduced in order to prevent the negative pressure in the intake pipe 2 from exceeding the necessary value (-550 mmHg). This operation prevents the undesirable enrichment of the air-fuel mixture and the increase in the concentration of CO in the exhaust gas, and, at the time of subsequent acceleration, the operation of the air bypass valve 9 is suspended so as to speed up the arrival of the mixture at the cylinders.

## Claims

1. Air-fuel control apparatus for injection-type multi-cylinder internal combustion engines, comprising
   - an intake pipe (2) coupled to the respective cylinders (1) for introducing air-fuel mixture into the cyclinders (1);
   - a throttle valve (6) provided in the intake pipe (2) for controlling the amount of introduced air;
   - fuel injection means (7, 8) disposed in the intake pipe (2), comprising a fuel injection valve (7) and an atomizer (8) connected to the fuel injection valve (7), for atomizing the injected fuel,
   - an airflow meter (4) provided in the intake pipe (2);
   - an air bypass pipe (10) connected to the intake pipe (2) the upstream end (10a) thereof opening at the upstream side of the airflow meter (4), and the downstream end (10b) thereof opening in the vicinity of the intake valve (2a) of the respective cylinder (1), the air bypass pipe (10) comprising an air bypass valve (9) determining an additional air amount introduced into the intake pipe (2) and being arranged such that the additional air provided by the air bypass pipe (10) is at first and the air-fuel mixture is subsequently sucked into the cylinder (1), thus forming a lower phase of additional air and an upper phase of air-fuel mixture, respectively, in the combustion chamber,

and
   - control means (18) responsive to signals representative of operational conditions of the engine and controlling the fuel injection means (7, 8) and the air bypass valve (9) such as to follow a predetermined reference value of the air-fuel ratio, the control means (18) controlling the opening degree of the air bypass valve (9) in dependence of the detected load of the engine such that within a predetermined load range a lean air-fuel mixture is obtained for each cylinder (1).

2. The air-fuel control apparatus according to claim 1, characterized in that the control means (18) are adapted to control the opening degree of the air bypass valve (9) in dependence of the detected load of the engine such that in the idling range and in the acceleration range an air-fuel mixture corresponding to the stoichiometric air-fuel ratio is obtained for each cylinder (1).

3. The air-fuel control apparatus according to claim 1 or 2, characterized in that the control means (18) are adapted to stop the introduction of additional air by keeping the air bypass valve (9) closed so that an air-fuel mixture corresponding to an air-fuel ratio lower than the stoichiometric value is obtained when the engine is operated under maximum load.

## Revendications

1. Dispositif de commande de l'air et du carburant pour des moteurs à combustion interne à plusieurs cylindres, du type à injection, comprenant
   - une tubulure d'admission (2) accouplée aux cylindres respectifs (1) pour l'introduction d'un mélange air-carburant dans les cylindres (1);

- un papillon d'étranglement (6) prévu dans la tubulure d'admission (2) pour commander la quantité d'air introduit;
- des moyens d'injection de carburant (7,8) disposés dans la tubulure d'admission (2) et comprenant une soupape d'injection du carburant (7) et un dispositif d'atomisation (8) raccordé à la soupape d'injection de carburant (7) pour atomiser le carburant injecté,
- un débitmètre d'air (4) prévu dans la tubulure d'admission (2);
- un conduit de dérivation d'air (10) raccordé à la tubulure d'admission (2) et dont l'extrémité amont (10a) débouche sur le côté amont du débitmètre d'air (4), et dont l'extrémité aval (10b) débouche au voisinage de la soupape d'admission (2a) du cylindre respectif (1), le conduit de dérivation d'air (10) comprenant une soupape de dérivation d'air (9) déterminant une quantité d'air additionnelle introduite dans la tubulure d'admission (2) et étant disposé de telle sorte que tout d'abord l'air additionnel délivré par le conduit de dérivation d'air (10), puis le mélange air-carburant sont introduits dans le cylindre (1), en formant respectivement une phase inférieure constituée par l'air additionnel et une phase supérieure constituée par le mélange air-carburant dans la chambre de combustion, et
- des moyens de commande (18) répondant à des signaux représentatifs de conditions de fonctionnement du moteur et commandant les moyens d'injection de carburant (7,8) et la soupape de dérivation d'air (9) de manière à suivre une valeur de référence prédéterminée du rapport air-carburant, les moyens de commande (18) commandant le degré d'ouverture de la soupape de dérivation d'air (9) en fonction de la charge détectée du moteur de sorte que, dans une plage déterminée de charges, un mélange air-carburant pauvre est obtenu pour chaque cylindre (1).

2. Dispositif de commande de l'air et du carburant selon la revendication 1, caractérisé en ce que les moyens de commande (18) sont adaptés pour commander le degré d'ouverture de la soupape de dérivation d'air (9) en fonction de la charge détectée du moteur de sorte que, dans la plage de ralenti et dans la plage d'accélération, un mélange air-carburant correspondant au mélange air-carburant stoéchiométrique est obtenu pour chaque cylindre (1).

3. Dispositif de commande de l'air et du carburant selon la revendication 1 ou 2, caractérisé en ce que les moyens de commande (18) sont adaptés pour arrêter l'introduction de l'air additionnel en maintenant la soupape de dérivation d'air (9) fermée de sorte qu'un mélange air-carburant correspondant à un rapport air-carburant inférieur à la valeur stoéchiométrique est obtenu lorsque le moteur fonctionne sous charge maximale.

**Patentansprüche**

1. Vorrichtung zur Steuerung des Kraftstoff/Luft-Verhältnisses für Mehrzylinder-Brennkraftmaschinen mit Kraftstoffeinspritzung, die aufweist:
   - Ein Ansaugrohr (2) zum Zuführen eines Kraftstoff-Luft-Gemisches, das mit den betreffenden Zylindern (1) verbunden ist,
   - eine Drosselklappe (6), die im Ansaugrohr (2) zum Steuern der zugeführten Luftmenge angeordnet ist,
   - eine Kraftstoffeinspritzeinrichtung (7, 8), die im Ansaugrohr (2) angeordnet ist und ein Kraftstoffeinspritzventil (7) und einen mit dem Kraftstoffeinspritzventil (7) verbundenen Zerstauber (8) zum Zerstäuben des eingespritzten Kraftstoffes aufweist,
   - einen Luftmengenmesser (4), der im Ansaugrohr (2) angeordnet ist,
   - eine Luft-Bypassleitung (10), die mit dem Ansaugrohr (2) verbunden ist und deren stromauf liegendes Ende (10a) stromauf in bezug auf den Luftmengenmesser (4) und deren stromab liegendes Ende (10b) in der Nähe des Einlaßventils (2a) des betreffenden Zylinders (1) münden, wobei die Luft-Bypassleitung (10) ein Luft-Bypassventil (9) aufweist, das eine in das Ansaugrohr (2) eingeführte Zusatzluftmenge bestimmt, und derart angeordnet ist, daß die durch die Luft-Bypassleitung (10) zugeführte Luft zuerst in den Zylinder (1) gesaugt wird und nachfolgend das Kraftstoff-Luft-Gemisch, wodurch im Brennraum ein unterer Bereich mit Zusatzluft und ein oberer Bereich mit dem Kraftstoff-Luft-Gemisch gebildet wird,

   und
   - eine Steuereinrichtung (18), deren Eingangsgrößen Betriebsbedingungssignale der Brennkraftmaschine bilden und welche die Kraftstoffeinspritzeinrichtung (7, 8) und das Luft-Bypassventil (9) derart steuert, daß ein vorgegebener Sollwert des Kraftstoff/Luft-Verhältnisses eingehalten wird, wobei die Steuereinrichtung (18) den Öffnungsgrad des Luft-Bypassventils (9) in Abhängigkeit von der erfaßten Motorlast steuert, so daß für jeden Zlyinder (1) innerhalb eines vorgegebenen Lastbereichs ein mageres Kraftstoff-Luft-Gemisch erhalten wird.

2. Vorrichtung nach Anspruch 1,
dadurch gekennzeichnet, daß
die Steuereinrichtung (18) den Öffnungsgrad des Luft-Bypassventils (9) in Abhängigkeit von der erfaßten Motorlast derart steuert, daß für jeden Zylinder (1) im Leerlaufs- und im Beschleunigungsbereich ein dem stöchiometrischen Kraftstoff/Luft-Verhältnis entsprechendes Kraftstoff-Luft-Gemisch erhalten wird.

3. Vorrichtung nach Anspruch 1 oder 2,
dadurch gekennzeichnet, daß
die Steuereinrichtung (18) die Zufuhr von Zusatzluft durch Geschlossenhalten des Luft-Bypassventils (9) beendet, so daß, wenn der Motor mit Maximallast betrieben wird, ein Kraftstoff-Luft-Gemisch erhalten wird, das einem Kraftstoff/Luft-Verhältnis entspricht, das niedriger ist als der stöchiometrische Wert.

# FIG. 1

# FIG. 2

(a) STARTER 20

ON

OFF ——— TIME

(b) OPENING TIME OF FUEL INJECTION VALVE 7

(c) OPERATION OF ATOMIZER 8

(d) OPERATION OF AIR BYPASS VALVE 9

ON

OFF

(e) TEMPERATUR OF COOLING WATER

0

## FIG. 3

(a) DEGREE OF OPENING OF THROTTLE VALVE 6

ACCELERATION  DECELERATION

→ TIME

(b) AMOUNT OF FUEL TO BE INJECTED

(c) OPERATION OF AIR BY PASS VALVE 9

ON

OFF

(d) DETECTED AIR-FUEL RATIO

20
15
0

## FIG. 4

(a) DEGREE OF OPENING OF THROTTLE VALVE 6

FULL OPENING

→ TIME

(b) AMOUNT OF FUEL TO BE INJECTED

(c) OPERATION OF AIR BY PASS VALVE 9

ON

OFF

(d) DETECTED AIR-FUEL RATIO

20
15
0

## FIG. 5

EP 0 187 654 B1

## FIG. 6

REFERENCE AIR-FUEL RATIO

MIDDLE LOAD RANGE

( FUEL-ECONOMICAL OPERATION RANGE )

(IDLING)

LIGHT LOAD RANGE

ACCELERATION RANGE

MAX. OUTPUT RANGE

1/4　2/4　3/4　7/8　4/4

DEGREE OF THROTTLE VALVE OPENING
( LIGHT ⟵ REQUIRED LOAD ⟶ HEAVY )

## FIG. 7

FLOW RATE OF FUEL ($\ell$/h)

(4/4)
(7/8)
(3/4)
MAX. LOAD
ACCELERATION
MIDDLE LOAD
(1/4)
THROTTLE VALVE OPENING
LIGHT LOAD

NUMBER OF REVOLUTIONS (min⁻¹)

## FIG. 8

OUTPUT VOLTAGE OF AIR-FUEL RATIO SENSOR

CONCENTRATION OF RESIDUAL OXYGEN IN EXHAUST GAS (%)

15

# FIG. 9a

START

CALCULATION OF
NUM. OF REV. OF
ENGINE (N)  ⌐110

CALCULATION OF
AIR FLOW RATE  ⌐112

READ OUTPUT
OF THROTTLE
SENSOR (θ)  ⌐114

FIG. 9b ← YES — IDLING?  ⌐116

NO

YES ← FULL OPENING ?  ⌐118

NO

FIG. 9c ← YES — $|d\theta/dt| > \beta$ ?  ⌐120

NO

FIG. 9d ← NO — LEAN REGION ?  ⌐122

YES

READ REFERENCE
AIR-FUEL RATIO($V_{03}$)  ⌐124

READ OPENING
TIME OF FUEL
INJECTION VALVE  ⌐126

CALCULATION OF
DUTY RATIO OF AIR
BYPASS VALVE  ⌐128

READ OUTPUT OF
AIR-FUEL RATIO
SENSOR (V)  ⌐130

NO — $|V - V_{03}| < \alpha$ ?  ⌐132

YES

END

## FIG. 9b

FROM FIG. 9a

↓

READ REFERENCE AIR-FUEL RATIO ($V_{01}$ OR $V_{05}$) ～200

↓

READ OPENING TIME OF FUEL INJECTION VALVE ～202

↓

READ OUTPUT OF AIR-FUEL RATIO SENSOR (V) ～204

↓

NO ← $|V - V_{01}$ OR $V_{05}| < \alpha$ ? ～206

↓ YES

( END )

## FIG. 9c

FROM FIG. 9a

↓

READ REFERENCE AIR-FUEL RATIO ($V_{04}$) ～400

↓

DETERMINATION OF ENRICHMENT OF FUEL ACCORDING TO $d\theta/dt$ ～402

↓

READ OPENING TIME OF FUEL INJECTION VALVE ～404

↓

READ OUTPUT OF AIR-FUEL RATIO SENSOR (V) ～406

↓

NO ← $|V - V_{04}| < \alpha$ ? ～408

↓ YES

( END )

## FIG. 9d

FROM FIG. 9a

↓

READ REFERENCE AIR-FUEL RATIO ($V_{02}$) ～500

↓

READ OPENING TIME OF FUEL INJECTION VALVE ～502

↓

CALCULATION OF DUTY RATIO OF AIR BYPASS VALVE ～503

↓

READ OUTPUT OF AIR-FUEL RATIO SENSOR (V) ～504

↓

NO ← $|V - V_{02}| < \alpha$ ? ～505

↓ YES

( END )